# EUROPEAN PATENT SPECIFICATION

(11) **EP 2 475 185 B1**
(45) Date of publication and mention of the grant of the patent: **01.11.2023**
(21) Application number: 10813363.8
(22) Date of filing: 03.09.2010
(51) Int. Cl.: H04W 72/51, H04W 16/12, H04W 48/08, H04W 72/02, H04W 84/08

(54) **METHOD FOR DISTRIBUTING CHANNELS FOR INTERPHONE, SYSTEM AND RADIO**
VERFAHREN ZUR VERTEILUNG VON KANÄLEN FÜR EINE SPRECHANLAGE, SYSTEM UND RADIO
PROCÉDÉ DE DISTRIBUTION DE CANAUX POUR UN INTERPHONE, SYSTÈME ET RADIO

(30) Priority: 04.09.2009 CN 200910189874
(43) Date of publication of application: 11.07.2012
(73) Proprietor: Hytera Communications Corp., Ltd., Shenzhen, Guangdong 518057 (CN)
(72) Inventor: YIN, Ruihua, Shenzhen Guangdong 518057 (CN); YU, Bingyan, Shenzhen Guangdong 518057 (CN); JIANG, Xiongbiao, Shenzhen Guangdong 518057 (CN)
(74) Representative: Eisenführ Speiser
(86) International application number: PCT/CN2010/076629
(87) International publication number: WO 2011/026441

(56) References cited:
- WO-A2-02/05571
- WO-A2-97/50267
- CN-A- 1 767 670
- CN-A- 101 180 899
- CN-A- 101 491 122
- CN-A- 101 765 029
- US-A- 2 685 642
- US-A1- 2006 019 689
- US-B1- 6 493 561
- "Radio Equipment and Systems (RES); Digital Short Range Radio (DSRR); I-ETS 300 168", IEEE, LIS, SOPHIA ANTIPOLIS CEDEX, FRANCE, vol. RES-7, 1 February 1993 (1993-02-01), XP014012222, ISSN: 0000-0001

## Description

### FIELD OF THE INVENTION

The invention relates to the field of Land Mobile Radio (LMR) communication, and more particularly, relates to a method for initiating a call by a radio, communication system and radio.

### BACKGROUND OF THE INVENTION

With the rapid development of economy, radios, as a flexible, convenient and fast communication means, have been paid more and more attention. The market of radios is prosperous but chaotic, and there are problems such as fake and inferior products flooding in the market, management of professional radios being out of control, frequency bands being used in disorder, and potential risks being brought to the social security.

Currently, there are following prominent problems in the utilization of middle-end and low-end radios:
1. Serious interference between radios. The non-standard use of frequency spectrum, even cross-band use, is susceptible to interference from other equipments and is prone to interfere with other wireless equipments operating on dedicated bands.
2. Low utilization efficiency of frequency spectrum. In lack of unified management, the arbitrary setting of communication frequency according to users' wish leads to the phenomenon that some bands are crowded while some are idle, thus the utilization efficiency of the bands is low; in addition, a conventional radio would forcibly occupy a channel regardless whether or not a call is performed and would deny users in another group to use the channel, hence the utilization efficiency of the channels is low.

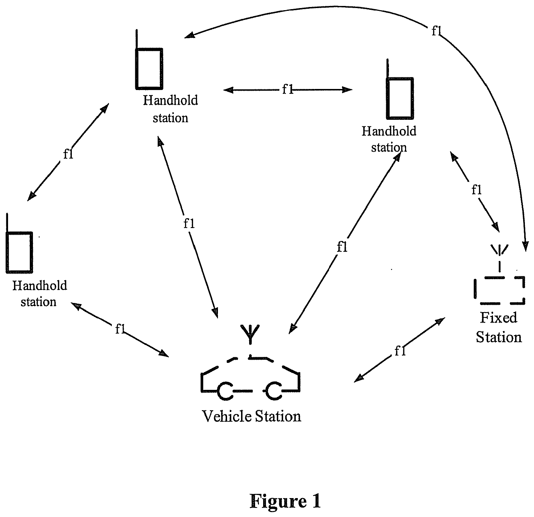

In the general point-to-point communication mode, which is the conventional communication mode as the main communication solution in the current market and is common in commercial use, communication is implemented as group calling by using one frequency point. As shown in Figure 1, for radio terminals in a same region, under the conditions of same radio-frequency carrier and same tone signaling, when initiating a call by pressing a Push to talk (PPT) button, any one of the radio terminals may set up the call with any of other radios in the region that falls within the receiving range to complete communication. The conventional communication mode, although having advantages of low price, simple operation, easy to use, etc., has obvious drawbacks. The increase in the number of radio terminal users puts a strain on frequency spectrum resources, and signal interference becomes the most challenging problem encountered by the terminal users.

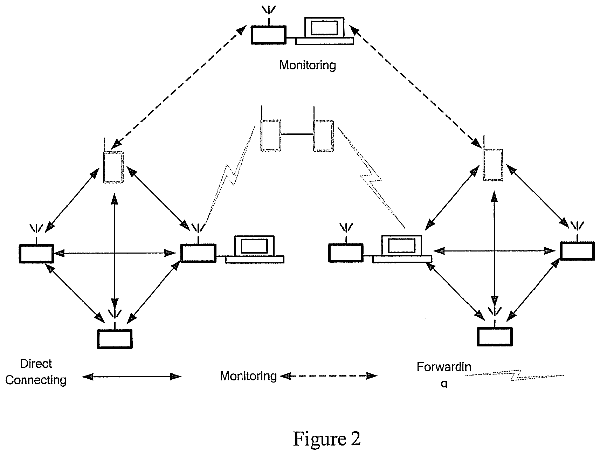

The existing techniques, such as Digital Short Range Radio (DSRR) (I-ETS 300 168) proposed by European Telecommunications Standards Institute (ETSI), technology of no-central control radio of China and the like, have disadvantages of time consuming in call setting up and power consuming, and therefore are limited in development and promotion. As shown in Figure 2, the no-central control radios in China refer to radio equipments developed and researched based on "900M no-central control multi-channel addressing communication system" specification. The no-central control radio generally has the following disadvantages:
1. The time needed to set up a call is long. Because 1 control channel and 159 channels share a frequency range of 2M, when the business burden is heavy, time consumed in searching for an idle channel increases significantly, and thus the time needed to set up a call is very long.
2. The probability of call collision is high. Since all the call set-up instructions with no central control are sent on the only one control channel, when calls occur frequently, collision is likely to occur, thus leading to failure of calls.
3. The probability of misjudgment for channel status is high. Due to interference between channels and pauses during a call, when scanning for an idle channel, misjudgment, such as determining a busy channel as an idle channel or determining an idle channel as a busy channel, is likely to happen.
4. The use time of battery is short. Since all the call set-up instructions with no central control are sent on the only one control channel, the radio within the calling scope needs to receive each of the instructions, thus the time for the terminal operating in receiving state is increased greatly, which will affect the life time of the battery.
"Radio Equipment and Systems (RES); Digital Short Range Radio (DSRR); I-ETS300 168" discloses methods of measurement for transmitter parameters. The frequency error of the transmitter is the difference between the measured carrier frequency and its nominal value. Methods of measurement for receiver parameters are also provided. The maximum usable sensitivity of the receiver is the minimum level of signal at the receiver input, at the nominal frequency of the receiver, with normal test signal, which without interference will produce after demodulation a data signal with a specified bit error radio.
US6493561B1 discloses a mobile communication system including a plurality of radio base stations forming respective radio zones and a mobile station selecting a wait zone and a base station to which a request for a message channel. Each of the plurality of radio base stations is assigned an order of priority. Information relating to the order of priority is used by the mobile station to select a wait zone and a base station to which a request for a message channel is to be issued.

### SUMMARY OF THE INVENTION

In view of the above disadvantages of low frequency spectrum utilization efficiency, poor anti-interference capability and long setting-up time for a call in the prior art, a problem to be resolved by the present invention is to provide a self-addressing communication method for a radio. The invention is set out in the appended set of claims.

Effect of the invention: by acquiring corresponding zone resource information based on a zone to which the radio belongs and determining a control channel and traffic channels available for the radio, in which different zones correspond to different channel resources, the radios in the zone and radios in other zones will not interfere with each other. The fact that different zones use different channel resources avoids channel interferences between different zones, avoids disorder in management of channel resources, prevents mass use of some frequency bands and the so-caused traffic congestion as well as low utilization efficiency of frequency bands, i.e., reduces the probability of call collision. The fact that the radios in the zone stay on the control channel in the case of standby avoids wasting of traffic channel resources and improves utilization efficiency of the channels. In addition, by means of division into zones, when conducting a call, radios in a same zone only need to determine the available traffic channels in the zone, rather than searching all the channels, which reduces the time needed to set up a call.

To sum up, the communication method and the radio provided by the present invention have advantages of:
1. improving utilization efficiency of frequency spectrum;
2. resolving the problem of interference between channels;
3. shortening the time for setting up a call;
4. improving the life time of battery; and
5. reducing the probability of call collision.

### BRIEF DESCRIPTION OF THE DRAWINGS

The present invention is further illustrated hereinafter in conjunction with drawings and embodiments of the present invention. In the drawings:
Figure 1 is a schematic diagram of a communication mode for conventional radios;
Figure 2 is a schematic diagram of a communication mode for non-center radios;
Figure 3 shows a schematic flowchart of a method for assigning channels for a radio according to a preferred embodiment of the present invention;
Figure 4 is a schematic flowchart of a communication method applicable to a radio according to an embodiment of the present invention;
Figure 5 is a schematic diagram of a communication mode for a self-addressing call.
Figure 6 is a diagram of frequency configuration for zones;
Figure 7 is a schematic diagram showing frequency reuse;
Figure 8 is a schematic diagram of a method for configuring channels in a zone;
Figure 9 is a schematic flowchart for implementing a self-addressing call;
Figure 10 is an example diagram of frequency reuse in different regions.
Figure 11 is an example diagram showing allocation of channels in a zone;
Figure 12 is a schematic flowchart for automatically configuring an idle channel in a zone;
Figure 13 is a schematic flowchart for a call in the case of releasing a traffic channel at an end of a call;
Figure 14 is a schematic flowchart for a call in the case of releasing a traffic channel when releasing a PPT button;
Figure 15 is a schematic flowchart for a call of a radio according to an embodiment of the present invention;
Figure 16 is a schematic flowchart for a call of a radio according to another embodiment of the present invention;
Figure 17 is a schematic flowchart for a call of a radio according to yet another embodiment of the present invention;
Figure 18 is a schematic structural diagram of a radio according to an embodiment of the present invention;
Figure 19 is a schematic structural diagram of a radio according to another embodiment of the present invention;
Figure 20 is a schematic structural diagram of a radio according to yet another embodiment of the present invention;
Figure 21 is a schematic flowchart of a communication method applicable to a radio according to an embodiment of the present invention; and
Figure 22 is a schematic structural diagram of a communication system applicable to radios according to an embodiment of the present invention.

### DETAILED DESCRIPTION OF THE INVENTION

To further recognize and understand the structural characteristics and effect of the present invention, detailed illustration is made in conjunction with preferred embodiments and the drawings.

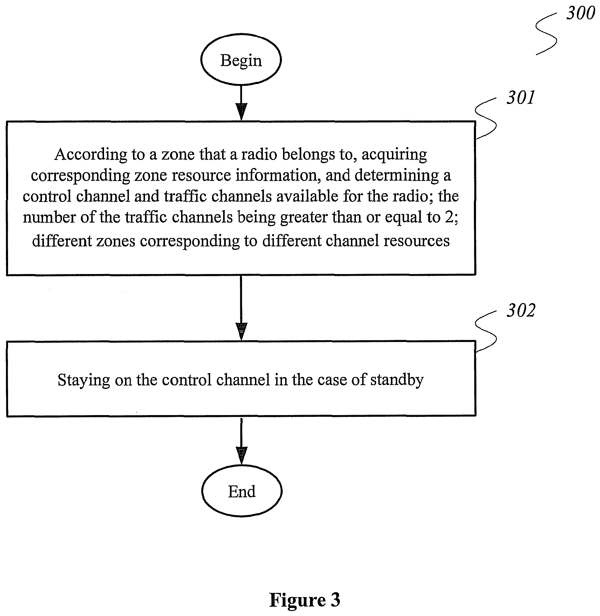

The present invention provides a method for assigning channels for a radio, which supports, for example but not limited to, voice service and data service. The flowchart of an embodiment of the method for assigning channels for a radio as provided by the present invention is shown in Figure 3. The method 300 includes:
Step 301, based on a zone to which the radio belongs, acquiring corresponding zone resource information and determining a control channel and traffic channels available for the radio; the number of the traffic channels being greater than or equal to 2; different zones corresponding to different channel resources; and
Step 302, staying on the control channel in the case of standby.

In an embodiment of the method for assigning channels for a radio, since the channel resources are assigned to different zones and the radios use the channel resources assigned to the zone to which the radios belong, the radios in the zone and radios in other zones will not interfere with each other. The fact that different zones use different channel resources avoids channel interferences between different zones, avoids disorder in management of channel resources, prevents mass use of some frequency bands and the so-caused traffic congestion as well as low utilization efficiency of frequency bands, i.e. reduces the probability of call collision. The fact that the radios in the zone stay on the control channel in the case of standby avoids wasting of traffic channel resources and improves utilization efficiency of the channels. In addition, by means of division into zones, when conducting a call, radios in a zone only need to determine the available traffic channels in the zone, rather than searching all the channels, which reduces the time needed to set up a call.

In another embodiment of the method for assigning channels for a radio as provided by the present invention, a zone preset during manufacture of the radio may be directly used as the zone to which the radio belongs, or the zone to which the radio belongs may be configured, usually in two ways:
1. searching for an idle zone and setting the searched idle zone as the zone to which the radio belongs. In the case that the zone preset during manufacture of the radio is the same as a used zone in the proximity when using the radio, an idle zone may be sought first by searching the zones, and the sought idle zone is set as the zone to which the radio belongs.
2. setting a predetermined zone as the zone to which the radio belongs. For the zone to which the radio belongs, a zone predetermined by the user may also be used, which may be determined by the user according to known information.

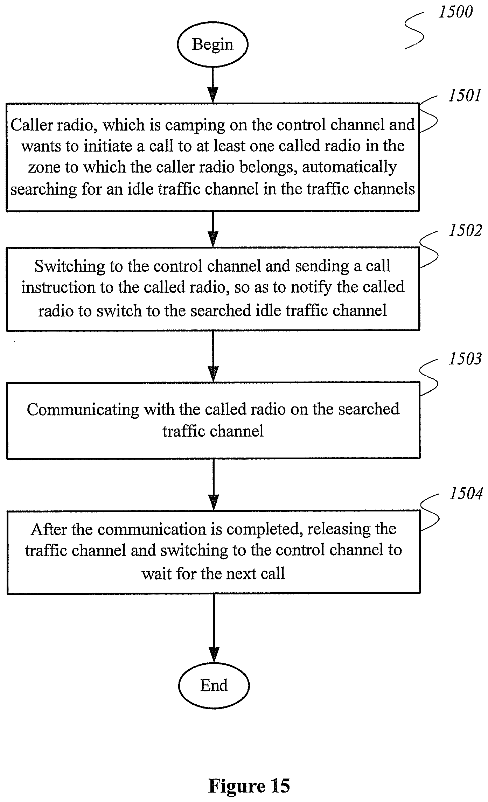

In another embodiment of the method for assigning channels for a radio as provided by the present invention, a method for initiating a call by a radio is provided:
seeking for an idle traffic channel by searching the traffic channels when a call is initiated;
sending, through the control channel, a call set-up request instruction containing a channel number of the idle traffic channel, so as to notify a called radio to switch to the idle traffic channel for establishing communication;
entering into the idle traffic channel to establish communication with the called radio; and
releasing the idle traffic channel and returning to the control channel for keeping on waiting. For description of the method for initiating a call by the radio, reference may also made to Figure 15.

There are three ways for releasing the idle traffic channel:
1. releasing the idle traffic channel after a PPT button of the radio is released;
2. releasing the idle traffic channel after the PPT button of the radio is released and a preset call reset time is up; or
3. releasing the idle traffic channel after the communication is completed.

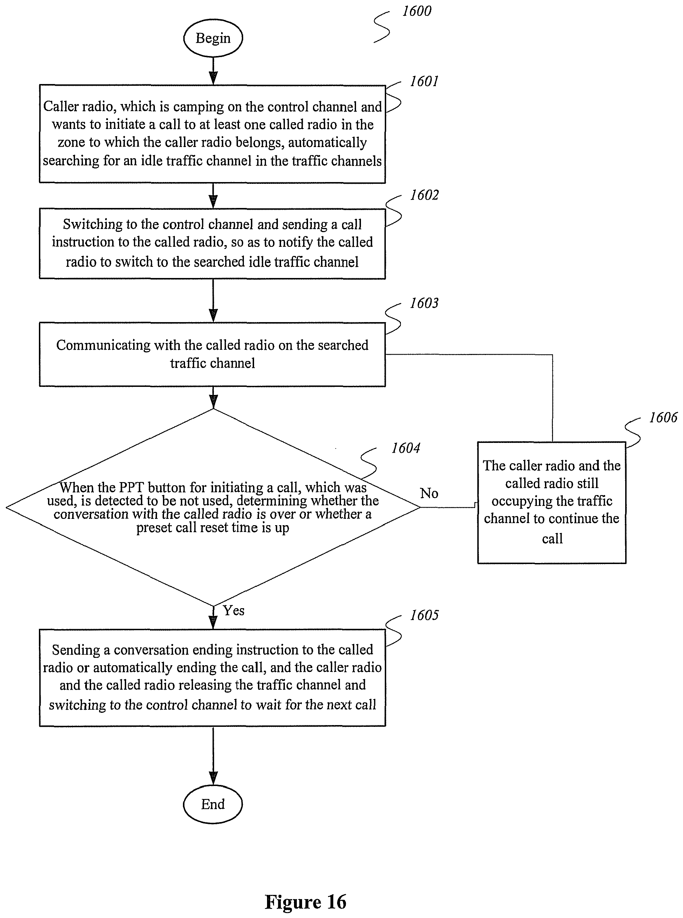

For related contents about releasing the idle traffic channel, one may refer to Figures 16-17.

After a called radio (one or more radios in a same zone), to which the caller radio desires to communicate, receives a call set-up request instruction from the control channel, the called radio obtains the channel number of a specified traffic channel from the call set-up request instruction and enters into the specified traffic channel to establish communication with the caller.

In the present invention, the radio communicates with at least one of the other radios in the zone to which the radio belongs by using the channel resources assigned to the zone. All the radios in a zone constitute a subscriber unit, each zone to which a subscriber unit corresponds is assigned with a different number, and each zone is assigned with different channel resources.

The numbers of the zones may be reused once the distance between subscriber units exceeds a reuse distance S (S>0) determined by the transmitting power of the radio. A same number corresponds to a same frequency set.

In an embodiment of the present invention, the frequency resources of each zone may be divided into multiple channels by using a channel spacing method, and the resulted channels represent a frequency set; then one of the multiple channels is set as a control channel and the others are set as traffic channels. In another embodiment of the present invention, the processing of frequency resources in the method for assigning channels for a radio is as follows:
A. For a frequency resource of N MHz (N>0), the frequency resource is divided into N× 1000/M channels by taking a channel space of M kHz (M>0), and each channel indicates a frequency point.
B. Each zone is assigned with L channels, the L channels of each zone represent a frequency set, and the frequency resource of N MHz is divided into N × 1000/M/L zones (L>0); the zones assigned to subscriber units are numbered from 0 to N × 1000/M/L-1, and the numbers of the zones are in one-to-one correspondence with the frequency sets assigned to the zones.

In an embodiment of the present invention, configuring frequency of zones also includes: when the distance between the subscriber units exceeds the reuse distance S (S>0), which is determined by the transmitting power of the radio, the same zone numbers may be reused, in which the same zone numbers correspond to the same frequency sets.

In an embodiment of the present invention, the frequency set assigned to each zone is a frequency set free of third-order intermodulation interference and/or adjacent channel interference; different subscriber units use different frequency sets free of third-order intermodulation interference and/or adjacent channel interference. By using such a frequency set, the probability of channel status misjudgment will be reduced greatly, so as to avoid the problem of determining a busy channel as an idle channel or determining an idle channel as a busy channel.

Figure 15 is a schematic diagram of a call procedure 1500 of a radio according to an embodiment of the present invention.

In step 1501, an caller radio, which is staying on the control channel and wants to initiate a call to at least one called radio in the zone to which the caller radio belongs, automatically searching for an idle traffic channel in the traffic channels, in which initiating the call is implemented by the user pressing the PPT button;
In step 1502, switching to the control channel and sending a call instruction to the called radio, so as to notify the called radio to switch to the searched idle traffic channel;
In step 1503, communicating with the called radio on the searched traffic channel;
In step 1504, after the communication is completed, releasing the traffic channel and switching to the control channel to wait for the next call.

Figure 16 is a schematic diagram of a call procedure 1600 of a radio according to another embodiment of the present invention. Steps 1601-1603 are the same as the steps 1501-1503 in the Figure 15, and the differences lies in steps 1604-1606.

In step 1604, when the PPT button for initiating a call, which was used, is detected to be not used, determining whether the conversation with the called radio is over or whether a preset call reset time is up; if yes, proceeding to step 1605; if no, proceeding to step 1606.

In step 1605, sending a conversation ending instruction to the called radio or automatically ending the call, and the caller radio and the called radio releasing the traffic channel and switching to the control channel to wait for the next call.

In step 1606, the caller radio and the called radio still occupying the traffic channel to continue the call, and the two parties continuing communicating with each other on the traffic channel.

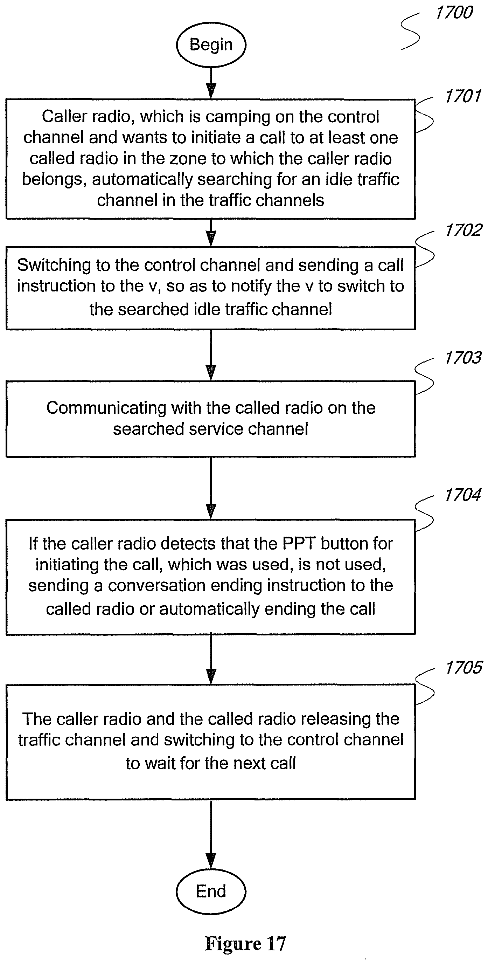

Figure 17 is a schematic diagram of a call procedure 1700 of a radio according to yet another embodiment of the present invention. Steps 171-1703 are the same as the steps 1501-1503 in Figure 15, and the difference lies in steps 1704-1705.

In step 1704, if the caller radio detects that the PPT button for initiating the call, which was used, is not used, sending a conversation ending instruction to the called radio or automatically ending the call.

In step 1705, the caller radio and the called radio releasing the traffic channel and switching to the control channel to wait for the next call.

The technical solutions of the present invention are illustrated in details hereinafter in conjunction with specific embodiments.

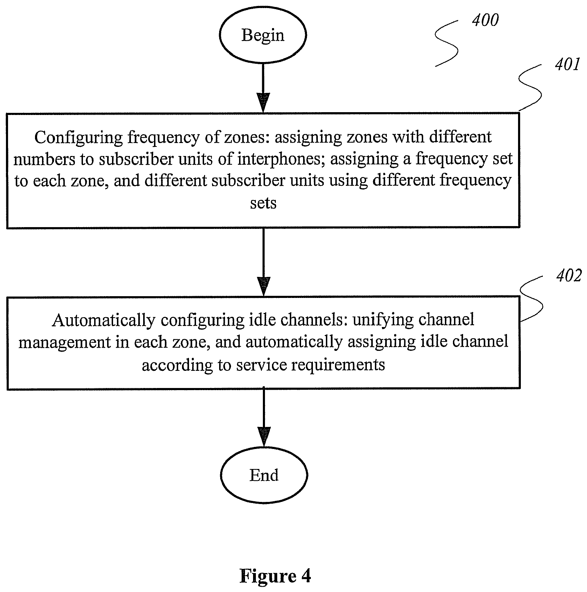

Figure 4 is a schematic flowchart of a communication method for a radio according to an embodiment of the present invention. The communication method for a radio includes configuring frequency of zones 401 and automatically configuring idle channels 402. Configuring frequency of zones may be carried out according to Figure 3. Automatically configuring idle channels 402 includes: unifying channel management in each zone, and automatically assigning idle channel according to service requirements.

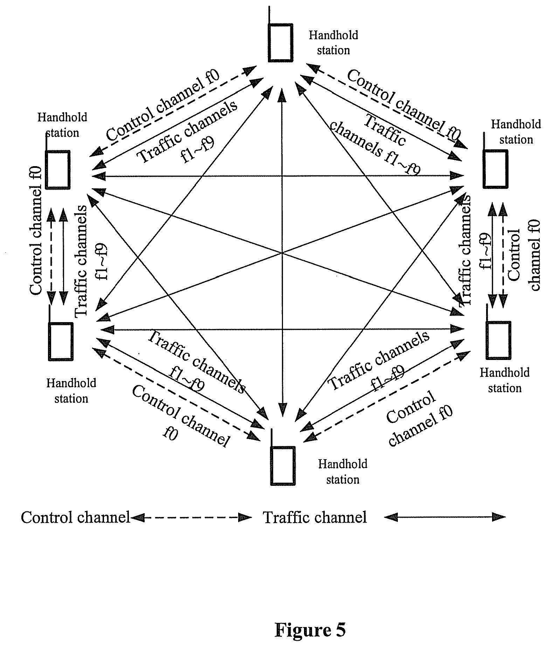

As shown in Figure 4 and Figure 5, in the present invention, technology for configuring frequency of zones and technology for automatically configuring idle channels are utilized, and both voice service and data service are supported, so as to resolve the above mentioned problems in the conventional communication. The technology for configuring frequency of zones refers to performing centralized management and unified configuration of frequency resources, such that each subscriber unit selects a zone with a number, each zone includes a frequency set free of third-order intermodulation interference and adjacent channel interference, and different subscriber units use different frequency sets free of third-order intermodulation interference and adjacent channel interference. The technology for automatically configuring idle channels refers to unifying channel management in each zone and automatically assigning idle channels according to service requirements.

### I. Configuring frequency of zones

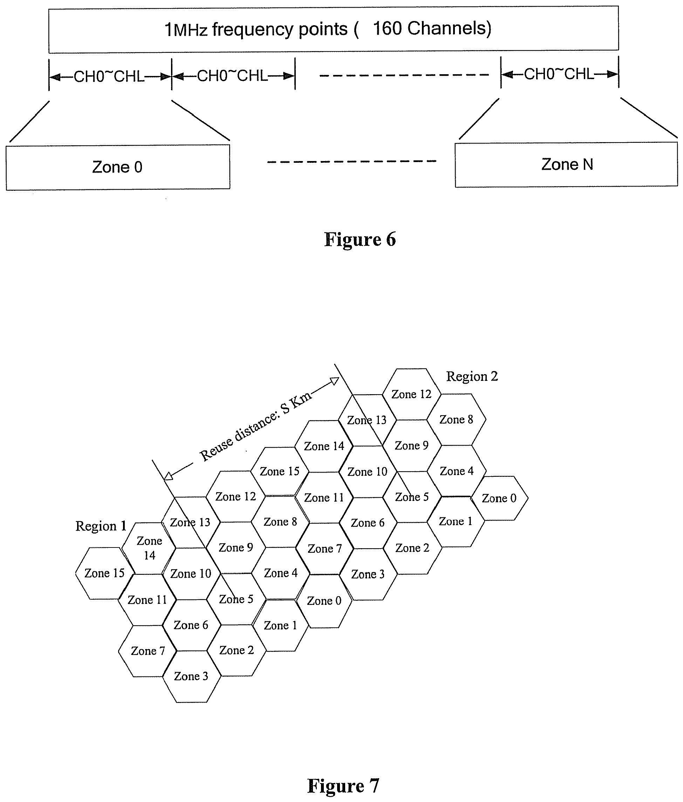

(1) in the following, how to configure frequency point resources, so that users may make rational use of the frequency point resources and the problems of interference and call collision may be avoided as much as possible, is illustrated in details. Generally, the frequency of zones is configured according to the following steps:
   1. Taking frequency resource of N (N>0) MHz as an example, by using a technology of M (M>0) kHz narrow band, the frequency resource of N (N>0) MHz is divided into N*1000/M channels, and each channel represents a frequency point.
      In the following, exemplary illustration is made using exemplary specific numerical values: Frequency resource of N MHz being 1 MHz, frequency point being 1MHz, M kHz channel spacing being 6.25 kHz (also, M kHz channel spacing may be 12.5 KHz or 25 KHz, or other spacing frequency) and the number of channels being 160. However, the present invention is not limited by the above specific numerical values, and other numerical values may be used for the frequency resources.
   2. assuming each zone is assigned with L channels free of third-order intermodulation interference and adjacent channel interference (L>0, and the present invention does not limit the number of the L channels), the 160 channels may be assigned to N=160/L subscriber units (zones) in a given region for use, and each zone is labeled with a number (such as Zone 0...Zone N), as shown in Figure 6.
      The value of L is calculated from Erlang formula, and is determined collectively by the total number of users, average traffic, average duration of call and percent of call loss. For the specific calculation, one may refer to the description of an example in the following.
   3. The number of each zone corresponds to a frequency set free of third-order intermodulation interference and adjacent channel interference, and channels in the frequency set free of third-order intermodulation interference and adjacent channel interference are labeled with channel numbers. Once the zone number is determined, the frequency points of the channels in a zone are thus determined. In other words, the channel numbers in a zone correspond to fixed frequency points.

Illustration of the frequency set free of third-order intermodulation interference and adjacent channel interference:
A frequency causing third-order intermodulation interference meets fx=fi+fj-fk or fx=2fi-fj, where fi, fj, fk are any three frequencies in a frequency set (f1, f2, ..., fL). If in the frequency set there is another frequency fx that may meet the above equations, the frequency set is deemed to be with third-order intermodulation interference; otherwise the frequency set is free of third-order intermodulation interference.

A frequency causing adjacent channel interference meets fi-fj=1CPS (1 channel spacing). If in the frequency set (f1, f2, ..., fL) the difference between any two frequencies fi, fj is equal to a channel spacing, the frequency set is deemed to be with adjacent channel interference; otherwise the frequency set is free of adjacent channel interference.

A frequency set that meets both the conditions of no third-order intermodulation interference and no adjacent channel interference is referred to as a frequency set free of third-order intermodulation interference and adjacent channel interference.

4. When the distance between subscriber units exceeds the reuse distance S (S>0, the reuse distance S is determined by the transmitting power of the radio), the same zone number may be reused, as shown in Figure 7. In Figure 7, the region with white background is region 1, and region with background of slashes is region 2, and portions with same background belong to a same region. Zones with same numbers use same frequency sets free of third-order intermodulation interference and adjacent channel interference. The reuse distance is S kilometers, and numbers of zones may be reused when distance exceeding the reuse distance.

(2) Illustration of traffic and the number of users that a zone is capable of providing.

### Calculation procedure:

1. Base on the percent of call loss B% and the number of channels L (the number of traffic channels is L-1), determining the total traffic of a zone as Y (L-1, B) by looking up the Erlang table.
2. Based on the average number of calls n and average call duration S in a time period of T, determining the average traffic per user as y=n*S/T.
3. Based on the total traffic Y and the average traffic a per user, determining the capacity of the system as N=Y/y = Y(L-1, B)/(n*S/T).
4. Assuming that the percent of call loss is 10%, the average traffic per user is 0.033 (on an average, each user makes a call every 5 minutes, and the duration of each call is 10s), the relationship between the number of channels L and the capacity of the zone is shown in the following table:

**Table 1 the relationship between the number of channels and the system capacity**

| Number of channels L | The number of users N |
|---|---|
| 4 | 38 |
| 7 | 112 |
| 10 | 196 |
| 13 | 284 |
| 16 | 374 |

### II. Automatically configuring idle channels

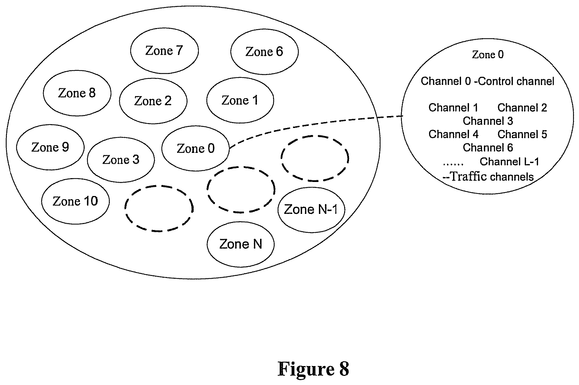

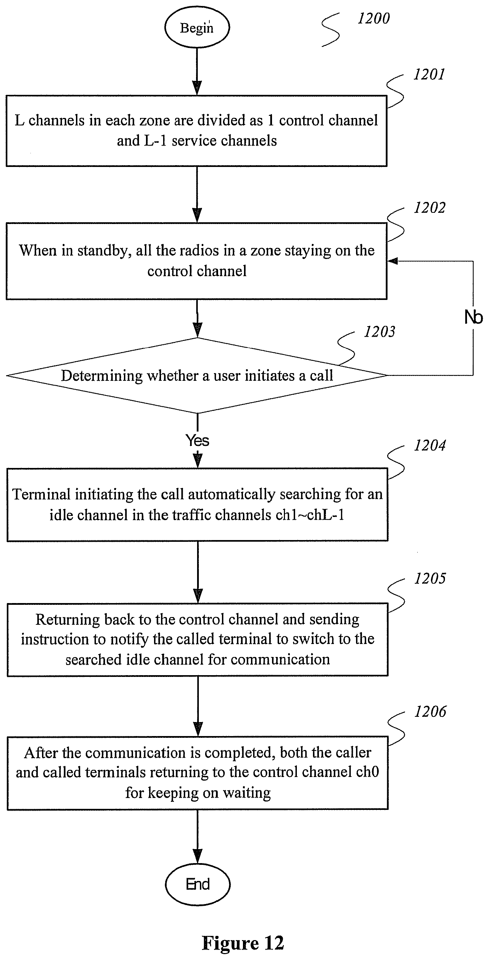

In the following, how to configuring a conversation channel and how to selecting a conversation mode is illustrated in details.
(1) The communication within a zone utilizes the technology of automatically configuring an idle channel, of which the procedure 1200 is as follows and as shown in Figure 12:
   Step 1201, dividing L channels in each zone as 1 control channel and L-1 traffic channels, as shown in Figure 8. In Figure 8, Zone 0, Zone 1, Zone 2, Zone 3, Zone 4, Zone 5, Zone 6, Zone 7, Zone 8, Zone 9, Zone 10, ..., Zone N-1, Zone N are shown. For example, for Zone 0, in the L channels ch0, ch1, ch2, ch3, ch4, ch5, ch6,..., chL-1, the channel ch0 is set as the control channel, and other L-1 channels ch1~chL-1 are set as traffic channels. To facilitate the illustration, it is assumed that for each of the zones, ch0 is the control channel, and ch1~chL-1 are traffic channels.
   Step 1202, when in standby, all the radios in a zone staying on the control channel ch0.
   Step 1203, determining whether a user initiates a call, if yes, proceeding to step 1204, and if not, continuing staying on the control channel and waiting for a call.
   Step 1204, if a radio user in the zone initiates a call, the radio automatically searching for an idle channel in the traffic channels ch1~chL-1.
   Step 1205, returning to the control channel and sending an instruction to notify the called radio to switch to the searched idle channel for communication.
   Step 1206, after the communication is completed, both the caller and called radio returning to the control channel ch0 for keeping on waiting.
(2) implementation of self-addressing call.

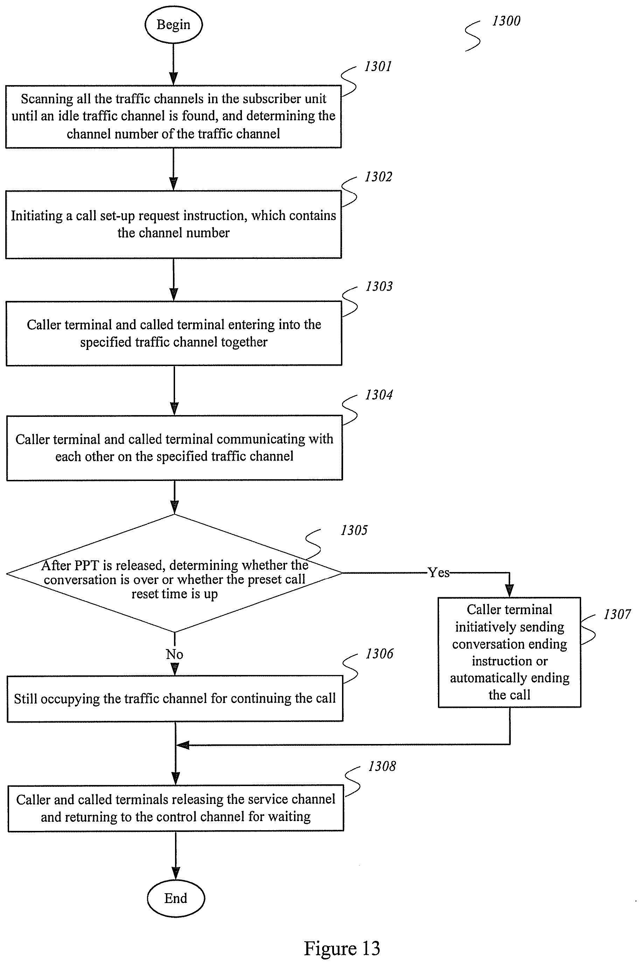

There are two way for implementing a self-addressing call: 1. releasing the traffic channel after the conversation is completed; or 2. releasing the traffic channel after the PTT button is released.
A. In the following, a call procedure 1300 is illustrated by taking the case of releasing the traffic channel after the conversation is completed as an example, which is shown in Figure 13.

The radio that stays on the control channel initiates a call when a user presses the Push to talk (PTT) button, and the following steps are carried out:
Step 1301, scanning all the traffic channels in the subscriber unit until an idle traffic channel is found, and determining the channel number of the traffic channel;
Step 1302, initiating a call set-up request instruction, which contains the channel number;
Step 1303, the caller radio and the called radio entering into the specified traffic channel together;
Step 1304, the caller radio and the called radio communicating (such as transmitting voice call information) with each other on the specified traffic channel;
Step 1305, after the PPT button is released, determining whether the conversation is over or whether the preset call reset time is up. If the conversation is not over or the reset time is not up, proceeding to step 1306; if the conversation is over or the reset time is up, proceeding to step 1307; and
Step 1306, still occupying the traffic channel for continuing the call;
   When the PTT button is pressed the next time, there is no need to scan the idle channels, and the voice is directly transmitted on the traffic channel, which saves the time for re-setting up the call, exerts no effect on the normal conversation of the users, and also reduces complexity for the communication.
Step 1307, if the conversation is over or the preset call reset time is up, the caller radio initiatively sending a conversation ending instruction or automatically ending the call, in which the call reset time may be set according to practical needs;

Step 1308, the caller and the called radios releasing the traffic channel and returning to the control channel for waiting.

B. In the following, the cal procedure is illustrated by taking the case of releasing the traffic channel when releasing the PPT button as an example.

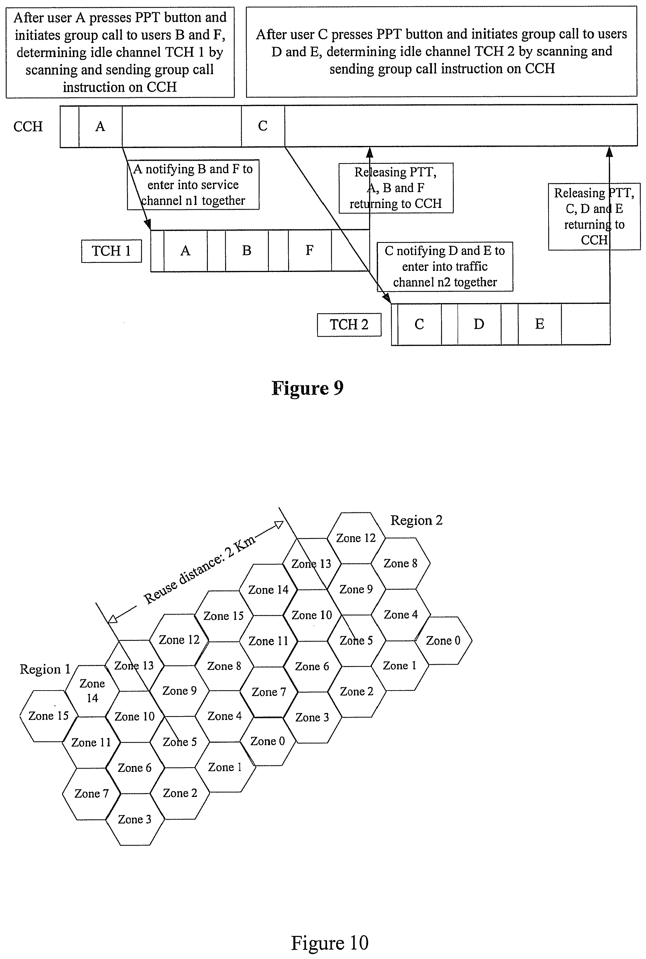

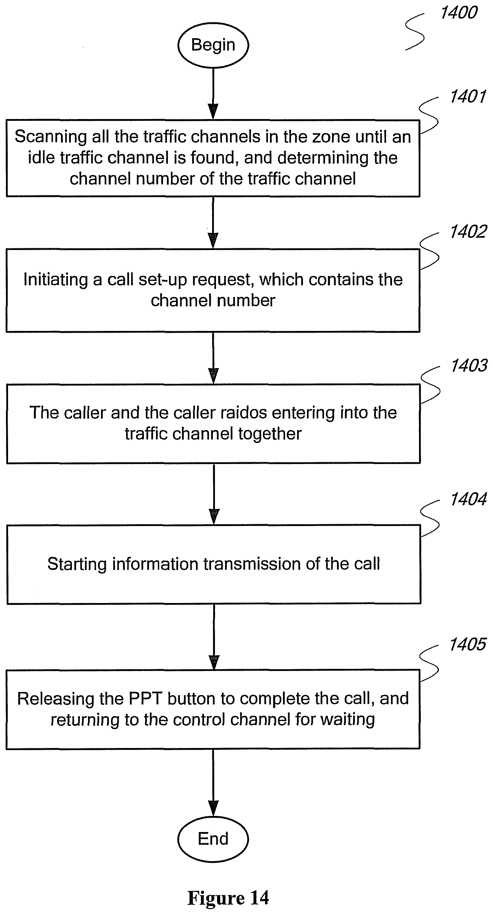

As shown in Figure 9 and Figure 14, once user A and user C press the PPT buttons of the terminals staying on the control channel to initiate a call, the following steps are carried out by a call processing center.

Step 1401, scanning all the traffic channels in the zone until an idle traffic channel is found, and determining the channel number of the traffic channel.

Step 1402, initiating a call set-up request, which contains the channel number.

Step 1403, the caller and the called radios entering into the traffic channel together.

Step 1404, starting information transmission of the call.

Step 1405, releasing the PPT button to complete the call, and returning to the control channel for waiting.

Detailed description is made by taking the user A in Figure 9 as an example(in Figure 9 the control channel is labeled as CCH, the traffic channel is labeled as TCH): after the user A presses the PPT button and initiates a group call to users B and F, all the traffic channels in the zone are scanned, and TCH 1is determined as the idle traffic channel; a group call instruction is initiated on the control channel CCH to notify the users B and F to enter into the traffic channel TCH 1, so as to start information transmission of the call. After the PPT button is released, i.e. the call is completed, the users A, B and F return to the control channel CCH.

As for user C, who initiates a group call to users D and E, all the traffic channels in the zone are scanned, and TCH 2 is determined as the idle traffic channel; a group call instruction is initiated on the control channel CCH to notify the users D and E to enter into the traffic channel TCH 2, so as to start information transmission of the call. After the PPT button is released, i.e. the call is completed, the users C, D and E return to the control channel CCH.

One or more examples in which the communication method is applied are illustrated hereinafter in details.

The main advantages and functions of the present invention are illustrated by taking a free public band that will be put into effect in Shenzhen Province of China as an example.
(1) Assuming that the free public band is a 1MHz frequency band, and the 6.25K narrow band technology is adopted, the 1MHz frequency points may provide 160 conversation channels. Assuming that every 10 channels constitute a zone, the 1MHz frequency points may provide 160/10=16 Zones in all, i.e., 16 subscriber units in a certain communication region (such as a communication range of 2 kilometers) may be serviced while no mutual interference is caused. In the drawing, the region with white background is region 1, and region with background of slashes is region 2, and portions with same background belong to a same region. The same zones with the same name use the same frequency band; the reuse distance of the zone is, for example but not limited to, 2 kilometers, and when exceeding the reuse distance, the same zone may be reused. The specific numerical values herein are just for the purpose of description and are not intended to limit the present invention.

Once going beyond the communication range of for example 2 kilometers, the 16 zones may be reused, i.e. the above 1MHz frequency band may be provided to another 16 subscriber units, as shown in Figure 10.

Similarly, by partition and reuse of the zones, the free frequency points of 1MHz may service users well while causing no mutual interference.

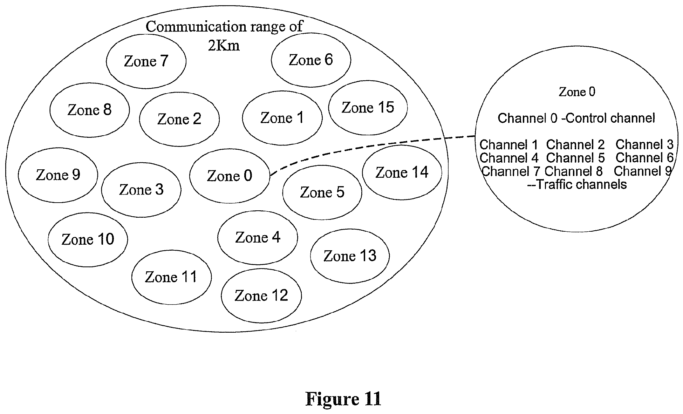

(2) The operation in a group is illustrated by taking a subscriber unit zone0 as an example. As shown in Figure 11, 10 channels of the zone0 are divided as one control channel ch0 (channel 0) and 9 traffic channels ch1~ch9 (channel 1~channel 9). Initially, all the radios in the subscriber unit stay on the control channel ch0. The caller first searches ch1~ch9 to find an idle traffic channel, then returns to the control channel, sends an instruction to a called radio, notifies the called radio to switch to the idle traffic channel together with the caller, so as to conduct the conversation. After the conversation is over, all the radios return to the control channel ch0 for keeping on waiting.

(3) Illustration of traffic and number of users that may be provided by the subscriber units in this example.

### Calculation procedure:

1. The number of the channels in a Zone is 10 (the number of the traffic channels is 9), and assuming an acceptable percent of call loss of 10%, by looking up the Ire formula, the system traffic that may be provided by one Zone is Y=Y(9,10)=6.546 Erl.
2. Assuming that on average each terminal user makes a call every 5 minutes, and the duration of each call is 10s, the average traffic per user is calculated as y= 10s/(5*60s)=0.033Erl.
3. Therefore, the number of terminal users that the system may accommodate is N=Y/y=6.546Erl/0.033Erl≈196. In other words, each Zone may provide a system capacity of about 196 radios.

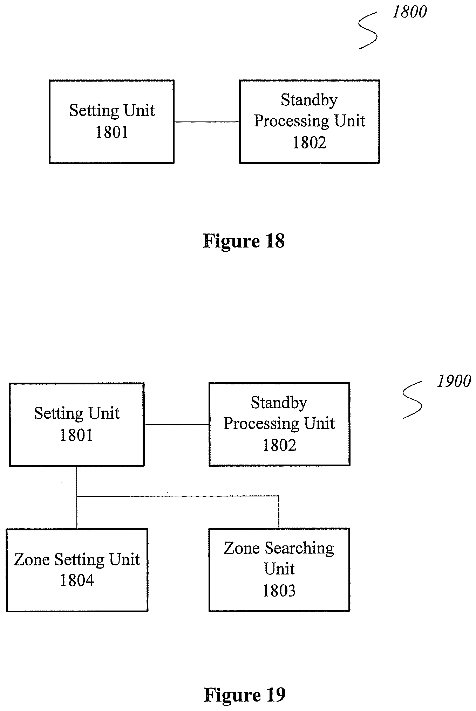

Figure 18 is a schematic structural diagram of a radio 1800 according to an embodiment of the present invention. The radio 1800 includes a setting unit 1801 and a standby processing unit 1802.

The setting unit 1801 is adapted to acquire, based on the zone to which the radio belongs, corresponding channel resource information of the zone, and determine a control channel and traffic channels available for the radio; the number of the traffic channels is greater than and equal to 2; different zones correspond to different channel resources.

The standby processing unit 1802 is adapted to stay on the control channel when in standby, where the control channel is determined by the setting unit.

Figure 19 is a schematic structural diagram of a radio 1900 according to an embodiment of the present invention. In addition to the setting unit 1801 and the standby processing unit 1802 in Figure 18, the radio 1900 further includes a zone searching unit 1803 and a zone setting unit 1804. The zone searching unit 1803 is adapted to search for an idle zone and set the searched idle zone as the zone to which the radio belongs. The zone setting unit 1804 is adapted to set a predetermined subset as the zone to which the radio belongs.

Although the zone searching unit 1803 and the zone setting unit 1804 are both shown in Figure 19, one of the two or both of them may be selected in practice, and the present invention is not so limited. Figure 19 is only for illustration and is not intended to limit the present invention.

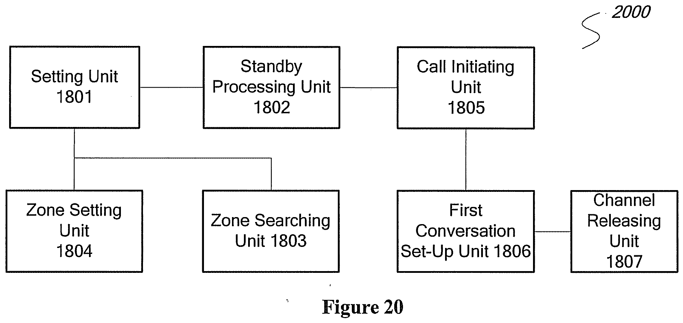

Figure 20 is a schematic structural diagram of a radio 2000 according to another embodiment of the present invention. In addition to the units in Figure 19, the radio 2000 further includes a call initiating unit 1805, a first conversation set-up unit 1806 and a channel releasing unit 1807.

The call initiating unit 1805 is adapted to seek for an idle channel by searching the traffic channels when a call is initiated, and to send, through the control channel, a call set-up request instruction containing a channel number of the idle traffic channel, so as to notify a called radio to switch to the idle traffic channel for establishing communication.

The first conversation set-up unit 1806 is adapted to enter into the idle traffic channel and establish communication with the called radio after the call initiating unit 1805 sends the call set-up request instruction.

The channel releasing unit 1807 is adapted to release the idle traffic channel and return to the control channel for continuing waiting.

The channel releasing unit 1807 in Figure 20 includes a first channel releasing unit (not shown), and the first channel releasing unit is adapted to release, after the PPT button of the radio is released, the idle traffic channel and return to the control channel for continuing waiting. In another embodiment of the present invention, the channel releasing unit 1807 includes a second channel releasing unit (not shown), and the second channel releasing unit is adapted to release, after the PPT button of the radio is released and the preset call reset time is up, the idle traffic channel and return to the control channel for continuing waiting. In another embodiment of the present invention, the channel releasing unit 1807 includes a third channel releasing unit (not shown), and the third channel releasing unit is adapted to release, after the communication is completed, the idle traffic channel and return to the control channel for continuing waiting.

The first channel releasing unit, the second channel releasing unit and the third channel releasing unit may be included in the radio in all or partially. When the radio includes two or all of them, the user may select one of the first channel releasing unit, the second channel releasing unit and the third channel releasing unit as needed to implement the channel releasing action.

In an embodiment of the present invention, any one the radios in Figures 18-20 may further includes a second conversation set-up unit (not shown), and the second conversation set-up unit is adapted to acquire, after a call set-up request instruction is received from the control channel, a channel number of a specified traffic channel from the received call set-up request instruction, and to enter into the specified traffic channel to establish communication with the caller.

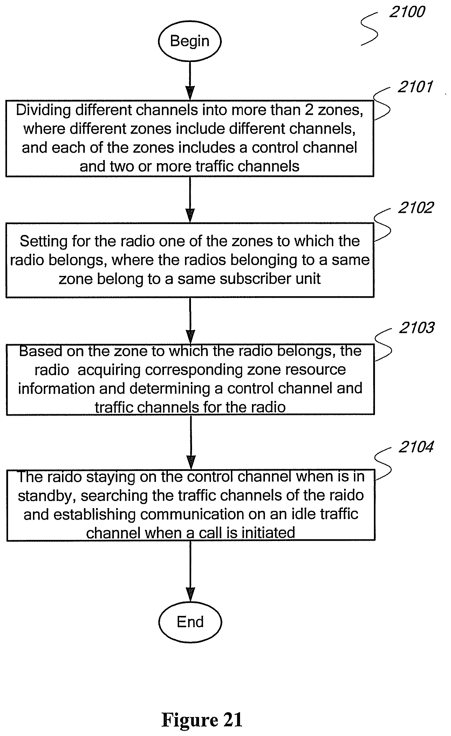

Figure 21 shows a schematic flowchart of a communication method 2100 applicable to a radio according to an embodiment of the present invention. The communication method includes:
Step 2101, dividing different channels into more than 2 zones, where different zones include different channels, and each of the zones includes a control channel and two or more traffic channels;
Step 2102, setting for the radio one of the zones to which the radio belongs, where the radios belonging to a same zone belong to a same subscriber unit;
Step 2103, based on the zone to which the radio belongs, the radio acquiring corresponding zone resource information and determining a control channel and traffic channels for the radio; and
Step 2104, the radio staying on the control channel when is in standby, searching the traffic channels of the radio and establishing communication on an idle traffic channel when a call is initiated.

In an embodiment of the present invention, in the communication method 2100 applicable to the radio, the control channel and the idle traffic channel used by the radio are channels that have no third-order intermodulation interference and/or have no adjacent channel interference between each other.

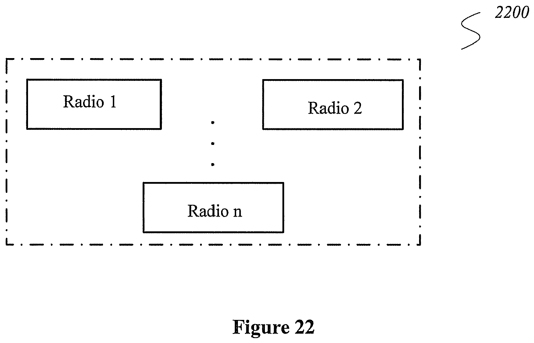

Figure 22 shows a schematic structural diagram of a communication system 2200 applicable to radios according to an embodiment of the present invention. The communication system 220 includes more than 2 radios (radio 1, radio 2,..., radio n, where n>2), and each of the radios belongs to a zone, where the zone includes a control channel and two or more traffic channels, and different zones include different channels. Radios that belong to a same zone, stay on the control channel of the same zone in the case of standby, search the traffic channels of the same zone and establish communication on a searched idle traffic channel when a call is initiated. For the specific communication method or communication procedure between radios, one may refer to the above descriptions and Figures 1-21, which will not be illustrated in details herein.

In the communication system 2200, assuming that radio 1 and radio 2 belong to a same zone 1, while radio n belongs to another zone 2, when the radio 1 initiates a call to the radio 2, they may communicate with each other in the way as shown and described in Figure 21. The radio n may communicate with other radios that belong to the zone 2.

In an embodiment of the present invention, the control channel and the traffic channels used in the communication system 2200 applicable to radios are channels that have no third-order intermodulation interference and/or no adjacent channel interference between each other.

For the specific use of the radio provided by the embodiment of the present invention, one may refer to the description above about the embodiment of the method.

How to achieve the object of the present invention by configuring frequency and configuring channel is illustrated hereinafter with reference made to the above description.

### (1) Frequency configuration

1. Interference between subscriber units is avoided. Different subscriber units use different frequency sets free of third-order intermodulation interference and adjacent channel interference, so that there is no collision during communication, and thus effectively channel interference between subscriber units is avoided.
2. There is no interference within a subscriber unit. Users in the same subscriber unit use channels that are divided based on frequencies free of third-order intermodulation interference and adjacent channel interference and are free of mutual interference, and thus conversation quality is ensured.
3. Channel utilization efficiency is improved. Multiple channels may be assigned for a subscriber unit, for example, in the above embodiment, one subscriber unit has 9 conversation channels in all, which is enough for the middle end and low end users even in the case of frequent use, and which may ensure the conversation efficiency and improve channel utilization efficiency, thereby avoiding waste of channels.
4. Call delay is reduced. By using this method, each subscriber unit use a zone, and the maximum total number of the traffic channels in the subscriber unit is for example 9 in the above embodiment, so only 9 channels are needed to be searched even in the busiest case, thus the delay is reduced greatly.
5. Call collision is avoided. By dividing as zones, the number of control channels is increased, the traffic of each control channel is decreased, and thus the probability of collision is reduced.

### (2 ) Channel configuration

1. Channel utilization efficiency is improved. Since the conversation channels of each communication group are unfixed, i.e. the conversation channels are not in one-to-one relationship with the traffic channels, the channel may be released immediately after each conversation ends, so as to be used by other conversation groups.
2. Interference within a zone is avoided. Idle channels are searched automatically, so that the channel that is being used or is interfered may be avoided, thereby improving call efficiency and avoiding the situation of causing interference or being interfered.
3. The probability of misjudging of idle channels is effectively avoided. By using "releasing traffic channel when releasing PPT button" as the method for implementing the self-addressing call, all the radios will return to the control channel for waiting when not performing transmitting or receiving. This may effectively avoid the misjudgment in the interval of conversations on channels, which would be occurred if the mode of "releasing traffic channel after the conversation is completed" is utilized.

By utilizing the embodiments of the present invention, the conflict and interference of frequency point resources may be avoided. Further, the most challenging problem encountered by the radio users may be resolved. In the present invention, the utilization efficiency of frequency bands is high, and international specification for utilization of frequency band resources and trend are met. In the present invention, the transition of the radio from "analog" to "digital" is implemented, users' habit is followed to a great extent, and the requirement of rapidly setting up a call is met.

In the present invention, by assigning radios that belong to different subscriber units to different zones, the radios that belong to the same subscriber unit conduct the communication within the zone and will not interfere with the radios in other zones. The fact that different zones use different channel resources avoids channel interferences between different zones, avoids disorder in management of channel resources, prevents mass use of some frequency bands and the so-caused traffic congestion as well as low utilization efficiency of frequency bands, i.e. reduces the probability of call collision. In addition, when conducting a call, radios only need to search frequency resources in the zone to which the radios belong, rather than searching all the frequency resources, which reduces the time needed to set up a call. To sum up, the communication method and the radio provided by the present invention have advantages of: 1. improving utilization efficiency of frequency spectrum; 2. resolving the problem of interference between channels; 3. shortening the time for setting up a call; 4. improving the life time of battery; and 5. reducing the probability of call collision. In addition, by using frequency sets free of third-order intermodulation interference and adjacent channel interference, the case of determining a busy channel as an idle channel or determining an idle channel as a busy channel will be prevented, and the probability of channel status misjudgment will be reduced greatly.

It should be noted that, the above embodiments are only used to illustrate the technical solutions of the invention and are not intended to limit the invention. Although the present invention is illustrated with reference to the preferred embodiments, it should be understood by those skilled in the art that the technical solutions of the invention may be modified or equivalently alternated without deviating from scope of the present invention, as defined by the claims.

## Claims

1. A method for initiating a call by a radio, comprising:
dividing different channels into more than two zones, wherein different zones comprise different channels, and each zone comprises a control channel and two or more traffic channels;
acquiring, based on a zone to which the radio belongs, corresponding resource information of the zone, and determining a control channel and traffic channels available for the radio, wherein the zone to which the radio belongs is determined from more than two zones;
staying on the control channel in the case of standby;
seeking for an idle traffic channel only in the zone to which the radio belongs by searching the traffic channels as determined when a call is initiated, wherein the call is initiated by a user pressing a PPT button;
sending, through the control channel as determined, a call set-up request instruction containing a channel number of the idle traffic channel, so as to notify a called radio to switch to the idle traffic channel for establishing communication;
entering into the idle traffic channel to establish communication with the called radio; and
determining whether a conversation with the called radio is over or whether a preset call reset time is up when the PPT button for initiating a call is detected to be not used;
sending a conversation ending instruction to the called radio or automatically ending the call, releasing, by the caller radio and the called radio, the idle traffic channel, and switching to the control channel to wait for the next call in a case that it is determined that the conversation with the called radio is over or the preset call reset time is up; and
occupying, by the caller radio and the called radio, the idle traffic channel to continue the call in a case that it is determined that the conversation with the called radio is not over and the preset call reset time is not up, wherein the caller radio and the called radio continues communicating with each other on the idle traffic channel.

2. The method for initiating a call by a radio according to claim 1, further comprising:
searching for an idle zone, and setting the searched idle zone as the zone to which the radio belongs; and/or
setting a predetermined zone as the zone to which the radio belongs.

3. The method for initiating a call by a radio according to claim 1 or 2, further comprising:
after receiving a call set-up request instruction from the control channel, acquiring a channel number of a specified traffic channel from the received call set-up request instruction; and
entering into the specified traffic channel to establish communication with a caller.

4. The method for initiating a call by a radio according to claim 1 or 2, wherein the control channel and the idle channel are channels having no third-order intermodulation interference and/or having no adjacent channel interference between each other.

5. A radio, comprising:
a setting unit (1801) adapted to divide different channels into more than two zones, wherein different zones comprise different channels, and each zone comprises a control channel and two or more traffic channels; acquire, based on a zone to which the radio belongs, corresponding channel resources information of the zone, and to determine a control channel and services channel available for the radio;
a standby processing unit (1802) adapted to stay on the control channel, which is determined by the setting unit, in the case of standby;
a call initiating unit (1805) adapted to seek for an idle traffic channel only in the zone to which the radio belongs by searching the traffic channels when a call is initiated, wherein the call is initiated by a user pressing a PPT button, and to send, through the control channel, a call set-up request instruction containing a channel number of the idle traffic channel, so as to notify a called radio to switch to the idle traffic channel for establishing communication;
a first conversation set-up unit (1806) adapted to enter into the idle traffic channel to establish communication with the called radio after the call initiating unit sends out the call set-up request instruction; and
a channel releasing unit (1807) adapted to:
determine whether a conversation with the called radio is over or whether a preset call reset time is up when the PPT button for initiating a call is detected to be not used;
send a conversation ending instruction to the called radio or automatically ending the call, release, by the caller radio and the called radio, the idle traffic channel, and switch to the control channel to wait for the next call in a case that it is determined that the conversation with the called radio is over or the preset call reset time is up; and
occupy, by the caller radio and the called radio, the idle traffic channel to continue the call in a case that it is determined that the conversation with the called radio is not over and the preset call reset time is not up, wherein the caller radio and the called radio continues communicating with each other on the idle traffic channel.

6. The radio according to claim 5, further comprising:
a zone searching unit (1803) adapted to search for an idle zone and set the searched idle zone as the zone to which the radio belongs; and/or
a zone setting unit (1804) adapted to set a predetermined zone as the zone to which the radio belongs.

7. The radio according to claim 5 or 6, further comprising:
a second conversation set-up unit adapted to acquire, after a call set-up request instruction is received from the control channel, a channel number of a specified traffic channel from the received call set-up request instruction, and to enter into the specified traffic channel to establish communication with the caller.

8. A communication system, comprising:
more than two radios, each of which belonging to one of more than two zones, wherein each of the more than two zones comprises a control channel and two or more traffic channels, and different ones of the more than two zones comprise different channels; and
wherein each radio is configured to:
acquire, based on a zone to which the radio belongs, corresponding resource information of the zone, and determine a control channel and traffic channels available for the radio, wherein the zone to which the radio belongs is determined from the more than two zones;
stay on the control channel in the case of standby;
seek for an idle traffic channel only in the zone to which the radio belongs by searching the traffic channels as determined when a call is initiated, wherein the call is initiated by a user pressing a PPT button;
send, through the control channel as determined, a call set-up request instruction containing a channel number of the idle traffic channel, so as to notify a called radio to switch to the idle traffic channel for establishing communication;
enter into the idle traffic channel to establish communication with the called radio; and
determine whether a conversation with the called radio is over or whether a preset call reset time is up when the PPT button for initiating a call is detected to be not used;
send a conversation ending instruction to the called radio or automatically end the call; release, by the caller radio and the called radio, the idle traffic channel, and switch to the control channel to wait for the next call in a case that it is determined that the conversation with the called radio is over or the preset call reset time is up; and
occupy, by the caller radio and the called radio, the idle traffic channel to continue the call in a case that it is determined that the conversation with the called radio is not over and the preset call reset time is not up, wherein the caller radio and the called radio continues communicating with each other on the idle traffic channel.

## Patentansprüche

1. Verfahren zum Einleiten eines Anrufs durch ein Funkgerät, umfassend:
Aufteilung verschiedener Kanäle in mehr als zwei Zonen, wobei verschiedene Zonen verschiedene Kanäle aufweisen und jede Zone einen Kontrollkanal und zwei oder mehr Verkehrskanäle aufweist;
Erfassen entsprechender Ressourceninformationen der Zone auf der Grundlage einer Zone, zu der das Funkgerät gehört, und Bestimmen eines Steuerkanals und von für das Funkgerät verfügbaren Verkehrskanälen, wobei die Zone, zu der das Funkgerät gehört, aus mehr als zwei Zonen bestimmt wird;
Verbleiben auf dem Kontrollkanal im Falle von Standby;
Suchen nach einem freien Verkehrskanal nur in der Zone, zu der das Funkgerät gehört, durch Durchsuchen der Verkehrskanäle, wie sie bestimmt werden, wenn ein Anruf eingeleitet wird, wobei der Anruf durch Drücken einer PPT-Taste durch einen Benutzer initiiert wird;
Senden einer Rufaufbauanforderungsinstruktion, die eine Kanalnummer des freien Verkehrskanals enthält, über den ermittelten Steuerkanal, um ein angerufenes Funkgerät zu benachrichtigen, auf den freien Verkehrskanal umzuschalten, um eine Kommunikation herzustellen;
Eintreten in den freien Verkehrskanal, um die Kommunikation mit dem gerufenen Funkgerät herzustellen; und
Feststellen, ob ein Gespräch mit dem angerufenen Funkgerät zu Ende ist oder ob eine voreingestellte Zeit zum Zurücksetzen des Anrufs abgelaufen ist, wenn festgestellt wird, dass die PPT-Taste zum Einleiten eines Anrufs nicht benutzt wird;
Senden einer Gesprächsbeendigungsinstruktion an das angerufene Funkgerät oder automatisches Beenden des Gesprächs, Freigeben des freien Verkehrskanals durch das anrufende Funkgerät und das angerufene Funkgerät und Umschalten auf den Steuerkanal, um auf den nächsten Anruf zu warten in einem Fall, in dem festgestellt wird, dass das Gespräch mit dem angerufenen Funkgerät zu Ende ist oder die voreingestellte Anrufrücksetzzeit abgelaufen ist; und
Belegen des freien Verkehrskanals durch das anrufende Funkgerät und das angerufene Funkgerät, um den Anruf in einem Fall fortzusetzen, in dem festgestellt wird, dass das Gespräch mit dem angerufenen Funkgerät nicht beendet ist und die voreingestellte Anrufrücksetzzeit nicht abgelaufen ist, wobei das anrufende Funkgerät und das angerufene Funkgerät die Kommunikation miteinander auf dem freien Verkehrskanal fortsetzen.

2. Verfahren zum Einleiten eines Anrufs durch ein Funkgerät nach Anspruch 1, ferner umfassend:
Suchen nach einer Freizone und Einstellen der gesuchten Freizone als die Zone, zu der das Funkgerät gehört; und/oder
Festlegen einer vorbestimmten Zone als die Zone, zu der das Funkgerät gehört.

3. Verfahren zum Einleiten eines Anrufs durch ein Funkgerät nach Anspruch 1 oder 2, ferner umfassend:
nach dem Empfang einer Rufaufbauanforderungsinstruktion vom Steuerkanal, Erfassen einer Kanalnummer eines bestimmten Verkehrskanals aus der empfangenen Rufaufbauanforderungsinstruktion; und
Eintreten in den angegebenen Verkehrskanal, um die Kommunikation mit einem Anrufer herzustellen.

4. Verfahren zum Einleiten eines Anrufs durch ein Funkgerät nach Anspruch 1 oder 2, wobei der Steuerkanal und der freie Kanal Kanäle sind, die keine Intermodulationsstörungen dritter Ordnung und/oder keine Nachbarkanalstörungen untereinander aufweisen.

5. Funkgerät, mit:
einer Einstelleinheit (1801), die geeignet ist, verschiedene Kanäle in mehr als zwei Zonen zu unterteilen, wobei verschiedene Zonen verschiedene Kanäle aufweisen und jede Zone einen Steuerkanal und zwei oder mehr Verkehrskanäle aufweist; auf der Grundlage einer Zone, zu der das Funkgerät gehört, entsprechende Kanalressourceninformationen der Zone zu erfassen und einen für das Funkgerät verfügbaren Steuerkanal und Dienstkanal zu bestimmen;
einer Standby-Verarbeitungseinheit (1802), die geeignet ist, im Fall von Standby auf dem von der Einstelleinheit bestimmten Steuerkanal zu verbleiben;
einer Rufeinleitungseinheit (1805), die geeignet ist, nur in der Zone, zu der das Funkgerät gehört, nach einem freien Verkehrskanal zu suchen, indem sie die Verkehrskanäle durchsucht, wenn ein Anruf eingeleitet wird, wobei der Anruf durch einen Benutzer eingeleitet wird, der eine PPT-Taste drückt, und über den Steuerkanal eine Rufaufbauanforderungsinstruktion zu senden, die eine Kanalnummer des freien Verkehrskanals enthält, um ein angerufenes Funkgerät zu benachrichtigen, damit es zum Aufbau der Kommunikation auf den freien Verkehrskanal umschaltet;
einer ersten Gesprächsaufbaueinheit (1806), die geeignet ist, in den freien Verkehrskanal einzutreten, um eine Kommunikation mit dem angerufenen Funkgerät herzustellen, nachdem die Anrufeinleitungseinheit die Anrufaufbauanforderungsinstruktion ausgesendet hat; und
einer Kanalfreigabeeinheit (1807), die geeignet ist:
festzustellen, ob ein Gespräch mit dem angerufenen Funkgerät beendet ist oder ob eine voreingestellte Zeit zum Zurücksetzen des Anrufs abgelaufen ist, wenn festgestellt wird, dass die PPT-Taste zum Einleiten eines Anrufs nicht benutzt wird;
eine Gesprächsbeendigungsinstruktion an das angerufene Funkgerät zu senden oder automatisch das Gespräch zu beenden,
den freien Verkehrskanal durch das anrufende Funkgerät und das angerufene Funkgerät freizugeben und auf den Kontrollkanal umzuschalten, um auf den nächsten Anruf zu warten, wenn festgestellt wird, dass das Gespräch mit dem angerufenen Funkgerät beendet ist oder die voreingestellte Anrufrücksetzzeit abgelaufen ist; und
den freien Verkehrskanal durch das anrufende Funkgerät und das angerufene Funkgerät zu belegen, um den Anruf in einem Fall fortzusetzen, in dem festgestellt wird, dass das Gespräch mit dem angerufenen Funkgerät nicht zu Ende ist und die voreingestellte Anrufrücksetzzeit noch nicht abgelaufen ist, wobei das anrufende Funkgerät und das angerufene Funkgerät weiterhin auf dem freien Verkehrskanal miteinander kommunizieren.

6. Funkgerät nach Anspruch 5, ferner mit:
einer Zonensucheinheit (1803), die geeignet ist, nach einer freien Zone zu suchen und die gesuchte freie Zone als die Zone festzulegen, zu der das Funkgerät gehört; und/oder
einer Zoneneinstellungseinheit (1804), die geeignet ist, eine vorbestimmte Zone als die Zone einzustellen, zu der das Funkgerät gehört.

7. Funkgerät nach Anspruch 5 oder 6, ferner mit:
einer zweiten Gesprächsaufbaueinheit, die geeignet ist, nach dem Empfang einer Anrufaufbauanforderungsinstruktion von dem Steuerkanal eine Kanalnummer eines spezifizierten Verkehrskanals aus der empfangenen Anrufaufbauanforderungsinstruktion zu erfassen und in den spezifizierten Verkehrskanal einzutreten, um eine Kommunikation mit dem Anrufer herzustellen.

8. Kommunikationssystem, mit:
mehr als zwei Funkgeräten, von denen jedes zu einer von mehr als zwei Zonen gehört, wobei jede der mehr als zwei Zonen einen Kontrollkanal und zwei oder mehr Verkehrskanäle aufweist und verschiedene der mehr als zwei Zonen verschiedene Kanäle aufweisen; und
wobei jedes Funkgerät dazu ausgestaltet ist:
auf der Grundlage einer Zone, zu der das Funkgerät gehört, entsprechende Ressourceninformationen der Zone zu erfassen und einen Kontrollkanal und für das Funkgerät verfügbare Verkehrskanäle zu bestimmen, wobei die Zone, zu der das Funkgerät gehört, aus den mehr als zwei Zonen bestimmt wird;
im Falle des Standby-Modus auf dem Kontrollkanal zu bleiben;
nach einem freien Verkehrskanal nur in der Zone zu suchen, zu der das Funkgerät gehört, durch Durchsuchen der ermittelten Verkehrskanäle, wenn ein Anruf eingeleitet wird, wobei der Anruf durch Drücken einer PPT-Taste durch einen Benutzer eingeleitet wird;
über den ermittelten Steuerkanal eine Rufaufbauanforderungsinstruktion zu senden, die eine Kanalnummer des freien Verkehrskanals enthält, um ein angerufenes Funkgerät zu benachrichtigen, auf den freien Verkehrskanal umzuschalten, um eine Kommunikation herzustellen;
in den freien Verkehrskanal einzutreten, um die Kommunikation mit dem gerufenen Funkgerät herzustellen; und
festzustellen, ob ein Gespräch mit dem angerufenen Funkgerät beendet ist oder ob eine voreingestellte Zeit zum Zurücksetzen des Anrufs abgelaufen ist, wenn festgestellt wird, dass die PPT-Taste zum Einleiten eines Anrufs nicht benutzt wird;
eine Anweisung zur Beendigung des Gesprächs an das angerufene Funkgerät zu senden oder das Gespräch automatisch zu beenden; den freien Verkehrskanal durch das anrufende Funkgerät und das angerufene Funkgerät freizugeben und auf den Kontrollkanal umzuschalten, um auf den nächsten Anruf zu warten, wenn festgestellt wird, dass das Gespräch mit dem angerufenen Funkgerät beendet ist oder die voreingestellte Rücksetzzeit für den Anruf abgelaufen ist; und
den freien Verkehrskanal durch das anrufende Funkgerät und das angerufene Funkgerät zu belegen, um den Anruf in einem Fall fortzusetzen, in dem festgestellt wird, dass das Gespräch mit dem angerufenen Funkgerät nicht zu Ende ist und die voreingestellte Anrufrücksetzzeit noch nicht abgelaufen ist, wobei das anrufende Funkgerät und das angerufene Funkgerät weiterhin auf dem freien Verkehrskanal miteinander kommunizieren.

## Revendications

1. Procédé pour lancer un appel par une radio, comprenant :
la division de différents canaux en plus de deux zones, dans lequel différentes zones comprennent différents canaux, et chaque zone comprend un canal de commande et deux canaux de trafic ou plus ;
l'acquisition, sur la base d'une zone à laquelle la radio appartient, d'informations de ressources correspondantes de la zone, et la détermination d'un canal de commande et de canaux de trafic disponibles pour la radio, dans lequel la zone à laquelle la radio appartient est déterminée à partir de plus de deux zones ;
le fait de rester sur le canal de commande dans le cas d'une mise en attente ;
le fait de chercher un canal de trafic au repos uniquement dans la zone à laquelle la radio appartient en recherchant les canaux de trafic tels que déterminés lorsqu'un appel est lancé, dans lequel l'appel est lancé par un utilisateur appuyant sur un bouton PPT ;
l'envoi, par le biais du canal de commande tel que déterminé, d'une instruction de demande d'obtention d'appel contenant un numéro de canal du canal de trafic au repos, de manière à notifier une radio appelée de passer au canal de trafic au repos pour établir une communication ;
l'entrée dans le canal de trafic au repos pour établir une communication avec la radio appelée ; et
le fait de déterminer si une conversation avec la radio appelée est terminée ou si un temps de réinitialisation d'appel prédéfini est arrivé lorsque le bouton PPT pour lancer un appel est détecté comme n'étant pas utilisé ;
l'envoi d'une instruction de fin de conversation à la radio appelée ou la fin de manière automatique de l'appel, la libération, par la radio appelante et la radio appelée, du canal de trafic au repos, et le passage au canal de commande pour attendre l'appel suivant dans un cas où il est déterminé que la conversation avec la radio appelée est terminée ou le temps de réinitialisation d'appel prédéfini est arrivé ; et
l'occupation, par la radio appelante et la radio appelée, du canal de trafic au repos pour continuer l'appel dans un cas où il est déterminé que la conversation avec la radio appelée n'est pas terminée et le temps de réinitialisation d'appel prédéfini n'est pas arrivé, dans lequel la radio appelante et la radio appelée continuent de communiquer l'une avec l'autre sur le canal de trafic au repos.

2. Procédé pour lancer un appel par une radio selon la revendication 1, comprenant en outre :
la recherche d'une zone au repos, et la définition de la zone au repos recherchée comme la zone à laquelle la radio appartient ; et/ou
la définition d'une zone prédéterminée comme la zone à laquelle la radio appartient.

3. Procédé pour lancer un appel par une radio selon la revendication 1 ou 2, comprenant en outre :
après la réception d'une instruction de demande d'obtention d'appel à partir du canal de commande, l'acquisition d'un numéro de canal d'un canal de trafic spécifié à partir de l'instruction de demande d'obtention d'appel reçue ; et
l'entrée dans le canal de trafic spécifié pour établir une communication avec un appelant.

4. Procédé pour lancer un appel par une radio selon la revendication 1 ou 2, dans lequel le canal de commande et le canal au repos sont des canaux n'ayant aucune interférence d'intermodulation du troisième ordre et/ou n'ayant aucune interférence de canaux adjacents entre eux.

5. Radio, comprenant :
une unité de définition (1801) adaptée pour diviser différents canaux en plus de deux zones, dans laquelle différentes zones comprennent différents canaux, et chaque zone comprend un canal de commande et deux canaux de trafic ou plus ; acquérir, sur la base d'une zone à laquelle la radio appartient, des informations de ressources de canal correspondantes de la zone, et pour déterminer un canal de commande et un canal de services disponibles pour la radio ;
une unité de traitement de mise en attente (1802) adaptée pour rester sur le canal de commande, qui est déterminé par l'unité de définition, dans le cas d'une mise en attente ;
une unité de lancement d'appel (1805) adaptée pour chercher un canal de trafic au repos uniquement dans la zone à laquelle la radio appartient en recherchant les canaux de trafic lorsqu'un appel est lancé, dans laquelle l'appel est lancé par un utilisateur appuyant sur un bouton PPT, et pour envoyer, par le biais du canal de commande, une instruction de demande d'obtention d'appel contenant un numéro de canal du canal de trafic au repos, de manière à notifier une radio appelée de passer au canal de trafic au repos pour établir une communication ;
une première unité d'obtention de conversation (1806) adaptée pour entrer dans le canal de trafic au repos pour établir une communication avec la radio appelée après que l'unité de lancement d'appel a émis l'instruction de demande d'obtention d'appel ; et
une unité de libération de canal (1807) adaptée pour :
déterminer si une conversation avec la radio appelée est terminée ou si un temps de réalisation d'appel prédéfini est arrivé lorsque le bouton PPT pour lancer un appel est détecté comme n'étant pas utilisé ;
envoyer une instruction de fin de conversation à la radio appelée ou mettre fin de manière automatique à l'appel, libérer, par la radio appelante et la radio appelée, le canal de trafic au repos, et passer au canal de commande pour attendre l'appel suivant dans un cas où il est déterminé que la conversation avec la radio appelée est terminée ou le temps de réinitialisation d'appel prédéfini est arrivé ; et
occuper, par la radio appelante et la radio appelée, le canal de trafic au repos pour continuer l'appel dans un cas où il est déterminé que la conversation avec la radio appelée n'est pas terminée et le temps de réinitialisation d'appel prédéfini n'est pas arrivé, dans laquelle la radio appelante et la radio appelée continuent de communiquer l'une avec l'autre sur le canal de trafic au repos.

6. Radio selon la revendication 5, comprenant en outre :
une unité de recherche de zone (1803) adaptée pour rechercher une zone au repos et définir la zone au repos recherchée comme la zone à laquelle la radio appartient ; et/ou
une unité de définition de zone (1804) adaptée pour définir une zone prédéterminée comme la zone à laquelle la radio appartient.

7. Radio selon la revendication 5 ou 6, comprenant en outre :
une seconde unité d'obtention de conversation adaptée pour acquérir, après qu'une instruction de demande d'obtention d'appel a été reçue à partir du canal de commande, un numéro de canal d'un canal de trafic spécifié à partir de l'instruction de demande d'obtention d'appel reçue, et pour entrer dans le canal de trafic spécifié pour établir une communication avec l'appelant.

8. Système de communication, comprenant :
plus de deux radios, chacune d'elles appartenant à l'une de plus de deux zones, dans lequel chacune des plus de deux zones comprend un canal de commande et deux canaux de trafic ou plus, et différentes zones des plus de deux zones comprennent différents canaux ; et
dans lequel chaque radio est configurée pour :
acquérir, sur la base d'une zone à laquelle la radio appartient, des informations de ressources correspondantes de la zone, et déterminer un canal de commande et des canaux de trafic disponibles pour la radio, dans lequel la zone à laquelle la radio appartient est déterminée à partir des plus de deux zones ;
rester sur le canal de commande dans le cas d'une mise en attente ;
chercher un canal de trafic au repos uniquement dans la zone à laquelle la radio appartient en recherchant les canaux de trafic tels que déterminés lorsqu'un appel est lancé, dans lequel l'appel est lancé par un utilisateur appuyant sur un bouton PPT ;
envoyer, par le biais du canal de commande tel que déterminé, une instruction de demande d'obtention d'appel contenant un numéro de canal du canal de trafic au repos, de manière à notifier une radio appelée de passer au canal de trafic au repos pour établir une communication ;
entrer dans le canal de trafic au repos pour établir une communication avec la radio appelée ; et
déterminer si une conversation avec la radio appelée est terminée ou si un temps de réinitialisation d'appel prédéfini est arrivé lorsque le bouton PPT pour lancer un appel est détecté comme n'étant pas utilisé ;
envoyer une instruction de fin de conversation à la radio appelée ou mettre fin de manière automatique de l'appel ; libérer, par la radio appelante et la radio appelée, le canal de trafic au repos, et passer au canal de commande pour attendre l'appel suivant dans un cas où il est déterminé que la conversation avec la radio appelée est terminée ou le temps de réinitialisation d'appel prédéfini est arrivé ; et
occuper, par la radio appelante et la radio appelée, le canal de trafic au repos pour continuer l'appel dans un cas où il est déterminé que la conversation avec la radio appelée n'est pas terminée et le temps de réinitialisation d'appel prédéfini n'est pas arrivé, dans lequel la radio appelante et la radio appelée continuent de communiquer l'une avec l'autre sur le canal de trafic au repos.
